(19) Europäisches Patentamt
European Patent Office
Office européen des brevets

(11) **EP 1 530 857 B1**

(12) **EUROPÄISCHE PATENTSCHRIFT**

(45) Veröffentlichungstag und Bekanntmachung des Hinweises auf die Patenterteilung:
**11.05.2011 Patentblatt 2011/19**

(21) Anmeldenummer: **03792124.4**

(22) Anmeldetag: **29.07.2003**

(51) Int Cl.:
*H04L 27/233* (2006.01)     *H04L 25/03* (2006.01)

(86) Internationale Anmeldenummer:
**PCT/DE2003/002543**

(87) Internationale Veröffentlichungsnummer:
**WO 2004/019580 (04.03.2004 Gazette 2004/10)**

(54) **DEMODULATION EINES CPFSK-SIGNALS MITTELS BERECHNUNG DER NULLDURCHGÄNGE UND EINES VITERBI-ALGORITHMUS**

DEMODULATION OF A CPFSK SIGNAL BY A CALCULATION OF THE PASSES THROUGH ZERO AND A VITERBI ALGORITHM

DEMODULATION D'UN SIGNAL CPFSK PAR CALCUL DES PASSAGES AU POINT ZERO ET A L'AIDE D'UN ALGORITHME DE VITERBI

(84) Benannte Vertragsstaaten:
**DE FR GB**

(30) Priorität: **19.08.2002 DE 10237867**

(43) Veröffentlichungstag der Anmeldung:
**18.05.2005 Patentblatt 2005/20**

(73) Patentinhaber: **Infineon Technologies AG**
**85579 Neubiberg (DE)**

(72) Erfinder:
• **NEUBAUER, André**
**47807 Krefeld (DE)**
• **NIEDERHOLZ, Jürgen**
**47608 Geldern (DE)**

(74) Vertreter: **Patentanwälte Lambsdorff & Lange**
**Dingolfinger Strasse 6**
**81673 München (DE)**

(56) Entgegenhaltungen:
**US-A- 5 784 416**

• **ISMAILOGLU N ET AL: "LOW-POWER DESIGN OF A DIGITAL FM DEMODULATOR BASED ON ZERO-CROSS DETECTION AT IF" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, Bd. 2 CONF. 50, September 1999 (1999-09), Seiten 810-813, XP000924622 ISBN: 0-7803-5436-2**

**EP 1 530 857 B1**

**Beschreibung**

Die Erfindung betrifft eine Vorrichtung und ein Verfahren zur Demodulation eines über Funk übertragenen analogen Empfangssignals, welches senderseitig mit einer Datensymbolfolge frequenzmoduliert wurde.

Die Vorrichtung bzw. das Verfahren, auf welche sich die Erfindung bezieht, sind vorzugsweise Bestandteile von schnurlosen digitalen Kommunikationssystemen, welchen der Bluetooth-, DECT-, WDCT-Standard oder ein ähnlicher Standard zugrunde liegt.

In derartigen Kommunikationssystemen werden empfängerseitig zur Demodulation des frequenzmodulierten Empfangssignals und zur Signaldetektion klassische Signalverarbeitungsmethoden verwendet. Ein oftmals verwendetes Verfahren basiert auf dem sogenannten Limiter-Diskriminator-FM-Demodulator, bei dem nach einer harten Limitierung des in der Regel komplexen Bandpasssignals eine Demodulation des frequenzmodulierten Signals, z.B. durch einen analogen Koinzidenzdemodulator, mit einer entsprechenden Signaldetektion erfolgt.

Ferner sind Empfängerkonzepte bekannt, bei denen das Zwischenfrequenzsignal mit Hilfe eines Analog-Digital-Wandlers in den Digitalbereich umgesetzt wird und die Signaldetektion mit Hilfe von Methoden der digitalen Signalverarbeitung realisiert wird. Ein solches Verfahren ist beispielsweise in der Schrift DE 101 03 479.2 beschrieben. Mit derartigen Verfahren lässt sich zwar eine qualitativ hochwertige Signaldetektion erzielen, jedoch ist der Nachteil ein aufwendiger Analog-Digital-Wandler.

In der Schrift İsmailoglu, N; Yalçin, T.: Low-Power Design of a Digital FM Demodulator Based on Zero-Cross Detection at IF. In: IEEE 50th Vehicular Technology Conference, 1999, Amsterdam, Netherlands, Volume: 2, 19 - 22 Sept. 1999, S. 810 - 813 wird eine Vorrichtung und ein Verfahren zur digitalen FM Demodulation mithilfe einer Nulldurchgangstechnik beschrieben. Dabei werden Nulldurchgänge eines empfangenen mit einer Datensymbolfolge frequenzmodulierten Eingangssignals durch Spannungspulse dargestellt, die durch einen Tiefpassfilter gefiltert werden. Das gefilterte Signal wird von dem Eingangssignal subtrahiert, um die Datensymbolfolge zu rekonstruieren.

Aufgabe der Erfindung ist es daher, eine Vorrichtung und ein Verfahren zur Demodulation eines digital frequenzmodulierten Empfangssignals anzugeben, mit welchem eine hohe Leistungsfähigkeit bei gleichzeitig niedrigem Realisierungsaufwand erzielt werden kann.

Die der Erfindung zugrunde liegende Aufgabenstellung wird durch die Merkmale der unabhängigen Patentansprüche 1 und 10 gelöst. Vorteilhafte Weiterbildungen und Ausgestaltungen der Erfindung sind in den Unteransprüchen angegeben.

Die erfindungsgemäße Vorrichtung dient zur Demodulation eines analogen Empfangssignals, welches senderseitig mit einer Datensymbolfolge $\{d_k\}$ frequenzmoduliert wurde. Dazu weist die Vorrichtung einen Detektor für Nulldurchgänge, einen Folgengenerator und eine Berechnungseinheit auf. Mittels des Detektors werden die Nulldurchgänge des Empfangssignals detektiert. Aus den zu den Nulldurchgängen gehörenden Zeitpunkten erzeugt der Folgengenerator eine Folge $\{z_i\}$. Jeweils zwei aufeinander folgende Nulldurchgänge werden dabei derart verarbeitet, dass aus den zugehörigen Zeitpunkten $t_i$ und $t_{i+1}$ die Differenz $t_{i+1} - t_i$ gebildet wird und aus der Differenz $t_{i+1} - t_i$ ein Folgenglied $z_i$ der Folge $\{z_i\}$ berechnet wird. Die Aufgabe der Berechnungseinheit ist es, die Datensymbolfolge $\{d_k\}$ zu rekonstruieren. Aus den möglichen Datensymbolfolgen muss dabei die gesuchte Datensymbolfolge $\{d_k\}$ ausgewählt werden. Aus jeder der möglichen Datensymbolfolgen lässt sich mit Hilfe von Koeffizienten $h_{i,k}$ jeweils eine Folge berechnen. Die gesuchte Datensymbolfolge $\{d_k\}$ zeichnet sich dadurch aus, dass die aus ihr berechnete Folge im Vergleich zu den übrigen berechneten Folgen die minimale euklidische Distanz zu der Folge $\{z_i\}$ aufweist. Die Folgenglieder einer berechneten Folge ergeben sich aus einer Faltung der jeweiligen Datensymbolfolge $\{d_k\}$ mit der Koeffizientenfolge $\{h_{i,k}\}$ zum Index k. Das heißt, dass bei der Berechnung eines Folgenglieds der berechneten Folge der Index i der Koeffizientenfolge $\{h_{i,k}\}$ fest ist. Zur Berechnung des nächsten Folgenglieds wird der Index i inkrementiert. Die Koeffizientenfolgen $\{h_{i,k}\}$ werden aus den Zeitpunkten ti gewonnen. Die Laufindizes i und k können sich beispielsweise über natürliche Zahlen erstrecken.

Die erfindungsgemäße Vorrichtung ist gegenüber herkömmlichen dem gleichen Zweck dienenden Vorrichtungen von Vorteil, da sich mit der erfindungsgemäßen Vorrichtung das frequenzmodulierte Empfangssignal besonders zuverlässig und aufwandsarm demodulieren lässt.

Die vorstehend beschriebene, in der Berechnungseinheit auszuführende Minimierungsaufgabe lässt sich besonders vorteilhaft mittels eines Viterbi-Algorithmus lösen. Eine Darstellung des Viterbi-Algorithmus findet sich beispielsweise in der Schrift WO 01/13524 A1.

Einem Modell für die Frequenzmodulation des analogen Empfangssignals kann vorteilhafterweise ein Filter zugrunde gelegt werden. Ein Filter führt eine Faltung einer Eingangsgröße mit Filterkoeffizienten durch und erzeugt dadurch eine Ausgangsgröße. In dem Modell für die Frequenzmodulation wird das Filter eingangsseitig mit der Datensymbolfolge $\{d_k\}$ gespeist. In dem Filter finden Faltungen der Datensymbolfolge $\{d_k\}$ mit den Koeffizientenfolgen $\{h_{i,k}\}$ statt. Als Ergebnis der Faltungen wird von dem Filter ausgangsseitig die Folge $\{z_i\}$ ausgegeben. Um die Faltungen ausführen zu können, liegen dem Filter die Koeffizientenfolgen $\{h_{i,k}\}$ vor.

Eine besonders bevorzugte Ausgestaltung der Erfindung sieht vor, dass die in der Berechnungseinheit auszuführende Minimierungsaufgabe mittels eines modifizierten Viterbi-Algorithmus durchgeführt wird.

Herkömmliche Anwendungsgebiete für Viterbi-Algorithmen sind die Entzerrung eines Empfangssignals, welches bei der Übertragung durch Mehrwegeinterferenz verzerrt wurde, und die Dekodierung eines kanalkodierten Empfangssignals. Bei der Abarbeitung des Viterbi-Algorithmus wird auf rekursive Weise der sogenannte kürzeste Pfad durch ein Zustands-Diagramm bestimmt, welches beispielsweise die Dekodiervorschrift widerspiegelt und als Trellis-Diagramm bezeichnet wird. Die Bestimmung dieses kürzesten Pfads durch das Trellis-Diagramm ist im Fall der Dekodierung gleichbedeutend mit der Rekonstruktion der Datensymbolfolge, welche senderseitig dem Kodierer zugeführt wurde.

Vorliegend soll der Viterbi-Algorithmus dazu verwendet werden, um aus der gemessenen Folge $\{z_i\}$ die Datensymbolfolge $\{d_k\}$ zu rekonstruieren. Da hierbei das vorstehend beschriebene Filtermodell zugrunde gelegt wird, stellen die Knoten des Trellis-Diagramms vorliegend die Filterzustände dar.

Bei der Anwendung des Viterbi-Algorithmus auf das Filtermodell ergibt sich jedoch eine Schwierigkeit. Bei einer herkömmlichen Anwendung des Viterbi-Algorithmus ist die Zahl der durchgeführten Schritte je Datensymbol konstant und in der Regel gleich dem Verhältnis von Abtastrate zu Symbolrate. Vorliegend sind die Messwerte, aus denen die Datensymbolfolge $\{d_k\}$ rekonstruiert werden soll, die Zeiten der Nulldurchgänge des Empfangssignals. Aufgrund der Frequenzmodulation ergibt sich aus den Nulldurchgängen jedoch keine äquidistante Folge. Ferner hängt die Häufigkeit der Nulldurchgänge von den Datensymbolen $d_k$ ab. Folglich muss der Viterbi-Algorithmus entsprechend modifiziert werden.

Bei dem vorliegend verwendeten Trellis-Diagramm ist vorgesehen, dass die Knoten die Filterzustände darstellen und dass vertikal übereinander liegende Knoten sich auf dieselbe Symboltaktgrenze beziehen. Das bedeutet, dass sich die durch die Knoten dargestellten Zustände in horizontaler Richtung um eine diskrete Zeit, nämlich die Symbolzeitdauer, durch welche der Symboltakt bestimmt ist, unterscheiden.

Die Abarbeitung eines herkömmlichen Viterbi-Algorithmus umfasst pro Zeitschritt im Wesentlichen drei Rechenabläufe: die Berechnung der Übergangsmetrikwerte im Trellis-Diagramm, die Durchführung der ACS (ADD-COMPARE-SELECT)-Operationen und die Trace-Back-Operation zur Ermittlung eines zeitlich zurückliegenden Datensymbols.

Der für die Lösung des vorliegenden Problems entwickelte Viterbi-Algorithmus beinhaltet weiterhin die drei vorstehend aufgeführten Rechenabläufe. Allerdings sind die Abfolgen der Berechnungen der Übergangsmetrikwerte und der ACS-Operationen gegenüber den herkömmlichen Viterbi-Algorithmen modifiziert.

Im Unterschied zu einem herkömmlichen Viterbi-Algorithmus berechnet die Berechnungseinheit die Übergangsmetrikwerte nicht zu den Zeitpunkten, die durch den Symboltakt festgelegt sind, sondern zu den Zeitpunkten, an denen die Nulldurchgänge des Empfangssignals auftreten. Dabei ist zu beachten, dass der zeitliche Abstand zwischen zwei Nulldurchgängen kleiner ist als die Symbolzeitdauer.

Die Berechnungseinheit berechnet folglich zum Zeitpunkt $t_{i+1}$ zu jedem Filterzustand Übergangsmetrikwerte für mindestens zwei Zustandsübergänge, die jeweils von einem möglichen Vorgänger-Zustand zum Zeitpunkt $t_i$ zu dem betrachteten Zielzustand zum Zeitpunkt $t_{i+1}$ führen. Die berechneten Übergangsmetrikwerte werden auf die zuvor berechneten Übergangsmetrikwerte, die zu dem jeweiligen Vorgänger-Zustand zum Zeitpunkt $t_i$ führen, akkumuliert.

Falls die Zeitpunkte $t_i$ und $t_{i+1}$ in demselben Symboltakt liegen, findet kein Zustandsübergang im Trellis-Diagramm statt. Folglich werden in diesem Fall zu dem Zeitpunkt $t_{i+1}$ nur ADD-Operationen und keine COMPARE- oder SELECT-Operationen durchführt.

Falls zwischen den Zeitpunkten $t_i$ und $t_{i+1}$ eine Symboltaktgrenze liegt, d.h. falls die Zeitpunkte $t_i$ und $t_{i+1}$ nicht in demselben Symboltakt liegen, wird für die Knoten der betrachteten Symboltaktgrenze zur Ausführung eines Knotenübergangs jeweils derjenige Zustandsübergang ermittelt wird, der mit minimaler aufakkumulierter Übergangsmetrik von einem der möglichen Vorgänger-Knoten zu dem zwischen den Zeitpunkten $t_i$ und $t_{i+1}$ liegenden betrachteten Zielknoten führt. Folglich werden in diesem Fall zu dem Zeitpunkt $t_{i+1}$ ADD-, COMPARE- und SELECT-Operationen durchgeführt.

Mittels des vorstehend erläuterten modifizierten Viterbi-Algorithmus lässt sich empfängerseitig ein frequenzmoduliertes analoges Empfangssignal, das bei der Übertragung über die Luftschnittstelle mit Rauschen beaufschlagt wurde, auf einfache Weise demodulieren.

Gemäß einer vorteilhaften Ausgestaltung der Erfindung werden die Folgenglieder $z_i$ der Folge $\{z_i\}$ derart aus den Zeitdifferenzen $t_{i+1} - t_i$ berechnet und die Folgenglieder $h_{i,k}$ der Koeffizientenfolgen $\{h_{i,k}\}$ derart aus den Zeitpunkten $t_i$ abgeleitet, dass folgende Gleichung erfüllt ist:

$$z_i \; = \; \sum_{k=-\infty}^{\infty} d_k \cdot h_{i,k} \qquad\qquad (1)$$

Vorzugsweise sind die Folgenglieder $z_i$ definiert durch:

$$z_i = 1 - \frac{2\omega_0}{\pi} \cdot (t_{i+1} - t_i) \tag{2}$$

In Gleichung (2) gibt $\omega_0$ die Trägerfrequenz des unmodulierten Signals an.

Die Koeffizienten $h_{i,k}$ sind vorzugsweise definiert durch:

$$h_{i,k} = 2\eta \cdot \left[q(t_{i+1} - k \cdot T) - q(t_i - k \cdot T)\right] \tag{3}$$

Hierbei stehen $\eta$ für den Modulationsindex, T für die Symbolzeitdauer und q(t) für das Integral über die Elementarimpulsform g(t).

Der Modulationsindex $\eta$ und das Integral q(t) über die Elementarimpulsform g(t) sind definiert durch folgende Gleichungen, wobei $\Delta\omega$ den Modulationshub bezeichnet:

$$\eta = \frac{\Delta\omega \cdot T}{\pi} \tag{4}$$

$$q(t) = \frac{1}{T} \int_{-\infty}^{t} g(\tau)d\tau \tag{5}$$

Vorteilhafterweise sind die Vorrichtung und der das frequenzmodulierte Signal aussendende Sender bereits synchronisiert, wenn von der Vorrichtung die für die Demodulation notwendigen Schritte unternommen werden. Zu diesem Zweck umfassen die Vorrichtung und der Sender insbesondere Einheiten zur Symbolsynchronisierung.

Vorzugsweise wird auszusendende Signal senderseitig mittels des CPFSK (Continuous Phase Frequency Shift Keying)-Verfahrens moduliert.

Die erfindungsgemäße Vorrichtung kann in besonders vorteilhafterweise in schnurlose digitale Kommunikationssysteme integriert sein, die für die Signalübertragung über Distanzen von nur wenigen Metern ausgelegt sind. Bei derart kurzen Übertragungswegen wird das Signal hauptsächlich durch Rauschen und weniger durch Mehrwegeinterferenzen gestört. Insbesondere können solche Kommunikationssysteme auf dem Bluetooth- oder dem DECT- oder dem WDCT-Standard basieren.

Das erfindungsgemäße Verfahren dient zur Demodulation eines senderseitig mit einer Datensymbolfolge $\{d_k\}$ frequenzmodulierten analogen Empfangssignals. In einem ersten Verfahrensschritt werden Nulldurchgänge des Empfangssignals detektiert. In einem zweiten Verfahrensschritt wird eine Folge $\{z_i\}$ generiert. Ein Folgenglied $z_i$ der Folge $\{z_i\}$ geht dabei aus einer Funktion der Differenz $t_{i+1} - t_i$ von den zu zwei aufeinander folgenden Nulldurchgängen gehörenden Zeitpunkten $t_i$ und $t_{i+1}$ hervor. In einem dritten Verfahrensschritt wird die Datensymbolfolge $\{d_k\}$ rekonstruiert. Dazu wird unter den möglichen Datensymbolfolgen diejenige als die gesuchte Datensymbolfolge $\{d_k\}$ ausgewählt, bei welcher die euklidische Distanz zwischen der Folge $\{z_i\}$ und einer empfängerseitig berechneten Folge minimal ist. Jedes Folgenglied der berechneten Folge wird aus einer Faltung der Datensymbolfolge $\{d_k\}$ mit einer Koeffizientenfolge $\{h_{i,k}\}$ zum Index k gebildet. Die Koeffizientenfolgen $\{h_{i,k}\}$ werden aus den Zeitpunkten $t_i$ gewonnen.

Das erfindungsgemäße Verfahren weist den Vorteil auf, dass es eine besonders zuverlässige und aufwandsarme Demodulation des Empfangssignals ermöglicht.

Die Erfindung wird nachfolgend in beispielhafter Weise unter Bezugnahme auf die Zeichnungen näher erläutert. In diesen zeigen:

Fig. 1a    eine Darstellung einer unmodulierten Trägerschwin- gung;

Fig. 1b    eine Darstellung einer digital frequenzmodulierten Trägerschwingung;

Fig. 1c    eine Darstellung der Symboltakte der Trägerschwin- gungen aus Fig. 1a und 1b;

Fig. 1d     eine Darstellung der Wirkungsweise eines Detektors für Nulldurchgänge; und

Fig. 2     eine schematische Darstellung eines Ausführungsbei- spiels der erfindungsgemäßen Vorrichtung.

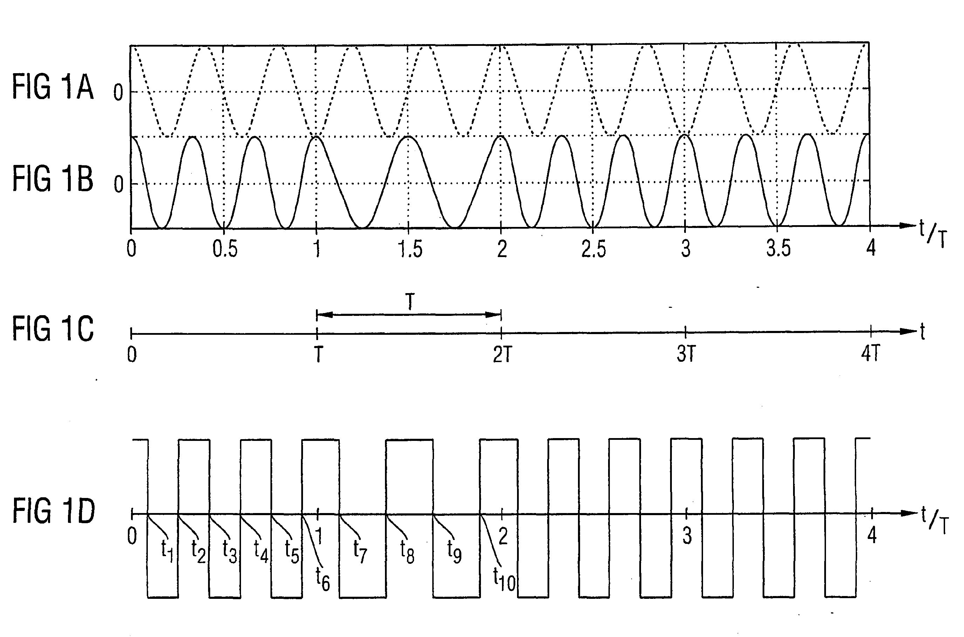

In Fig. 1a ist eine unmodulierte Trägerschwingung dargestellt. In Fig. 1b ist die in Fig. 1a gezeigte Trägerschwingung nach einer Frequenzmodulation dargestellt. Die Fig. 1a und 1b entsprechen dem oberen Teil von Bild 11.2.3 auf Seite 385 des Buchs "Nachrichtenübertragung" von K. D. Kammeyer, erschienen im B. G. Teubner Verlag, Stuttgart, 2. Auflage, 1996.

Die Modulationsart in dem in Fig. 1b gezeigten Beispiel ist eine zweistufige diskrete Frequenzmodulation (FSK; Frequency Shift Keying), also eine Frequenzumtastung zwischen zwei definierten Frequenzen aufgrund eines zweistufigen Datensymbols. Ein Datensymbol kann in dem vorliegenden Beispiel die Werte -1 und 1 annehmen. In Fig. 1b sind vier Symboltakte mit einer Datensymbolfolge [1 -1 1 1] gezeigt. Jeder Symboltakt weist eine Symbolzeitdauer T auf. Die Symboltaktgrenzen sind in Fig. 1c gegen die Zeit t aufgetragen.

In dem vorliegenden Fall betragen die Trägerfrequenz $\omega_0$ = 2,5 · 2 · $\pi$/T und der Modulationsindex $\eta$ = 1. Die Phase der Schwingung verläuft kontinuierlich (CPFSK). Falls sich an den Symboltaktgrenzen das Datensymbol ändert, so findet ein diskreter Frequenzsprung statt. Vorliegend handelt es sich um zweistufige Datensymbole, denen für den Wert -1 die Frequenz $\omega_0$ - $\Delta\omega$ und für den Wert 1 die Frequenz $\omega_0$ + $\Delta\omega$ zugewiesen wird. In den meisten Fällen ist die Modulation bandbegrenzt, sodass die Frequenzsprünge nicht rechteckförmig, sondern zeitlich ausgedehnt erfolgen. Ein Beispiel hierfür ist das Gaussian Minimum Shift Keying (GMSK).

Einem von einem Sender ausgesendeten frequenzmodulierten Bandpasssignal x(t) kann das folgende CPFSK-Signalmodell zugrunde gelegt werden:

$$x(t) \,=\, Re\left\{s(t) \cdot e^{j\omega_0 t}\right\} \tag{6}$$

Hierbei ist s(t) das äquivalente Tiefpasssignal:

$$s(t) \,=\, a \cdot e^{j\phi(t)} \tag{7}$$

Die Augenblicksphase $\phi$(t) berechnet sich aus dem Integral über die Augenblicksfrequenz $\omega_i$(t) :

$$\phi(t) \,=\, \int_{-\infty}^{t} \omega_i(t')dt' \tag{8}$$

$$\omega_i(t) \,=\, \Delta\omega \cdot \sum_{k=-\infty}^{\infty} d_k \cdot g(t - k \cdot T) \tag{9}$$

In Gleichung (9) bezeichnet g(t) die Elementarimpulsform. Für ein GMSK-Signal oder ein GFSK (Gaussian Frequency Shift Keying)-Signal gilt:

$$g(t) = \frac{1}{2}\left\{ erf\left( \alpha \cdot \frac{t + \frac{T}{2}}{T} \right) - erf\left( \alpha \cdot \frac{t - \frac{T}{2}}{T} \right) \right\} \tag{10}$$

Die Funktion erf() steht für die Gaußsche Fehlerfunktion.

Der Faktor $\alpha$ hängt von dem Zeitdauer-Bandbreite-Produkt ab:

$$\alpha = \sqrt{\frac{2}{\ln 2}} \cdot \pi \cdot f_{3dB} \cdot T \tag{11}$$

Berücksichtigt man die Gleichung für den Modulationsindex $\eta$ :

$$\eta = \frac{\Delta\omega \cdot T}{\pi} \tag{12}$$

und das Integral q(t) über die Elementarimpulsform g(t):

$$q(t) = \frac{1}{T} \int_{-\infty}^{t} g(\tau)d\tau \, , \tag{13}$$

so ergibt sich für die Augenblicksphase $\phi(t)$ :

$$\phi(t) = \pi\eta \cdot \sum_{k=-\infty}^{\infty} d_k \cdot q(t - k \cdot T) \tag{14}$$

Die Elementarimpulsform g(t) ist in der Regel so normiert, dass das Integral q(t), welches auch als Phasenelementarimpuls bezeichnet wird, nach L Symboltakten den Endwert 1 aufweist. Die sogenannte Einflusslänge L gibt die Zahl der Symboltakte an, über die sich der Elementarimpuls erstreckt. Folglich gilt :

$$q(t) = \begin{cases} 0 \ \text{für} \ t \leq 0 \\ 1 \ \text{für} \ t \geq L \cdot T \end{cases} \tag{15}$$

Für ein folgendermaßen vorgegebenes Zeitintervall

$$l \cdot T \leq t < (l + 1) \cdot T \tag{16}$$

gilt:

$$\phi(t) \ = \ \phi_1 \ + \ \pi\eta \ \cdot \ \sum_{k=l-L+1}^{l} d_k \ \cdot \ q(t - k \cdot T), \tag{17}$$

wobei $\phi_1$ folgendermaßen definiert ist:

$$\phi_1 \ = \ \pi\eta \ \cdot \ \sum_{k=-\infty}^{l-L} d_k \ \cdot \ q(t - k \cdot T) \tag{18}$$

Das Prinzip der vorliegenden Erfindung beruht darauf, dass die Nulldurchgänge des Empfangssignals mittels eines Nulldurchgangsdetektors gemessen werden. Bei dem vorstehend beschriebenen CPFSK-Signalmodell treten Nulldurchgänge der Quadraturkomponenten Re{x(t)} und Im{x(t)} zu Zeitpunkten $t_i$ (i = 0, 1, 2,...) auf, wenn folgende Bedingung erfüllt ist:

$$\omega_0 \ \cdot \ t_i \ + \ \phi(t_i) \ = \ i \ \cdot \ \frac{\pi}{2} \tag{19}$$

In Fig. 1d sind die Nulldurchgänge der in Fig. 1b gezeigten frequenzmodulierten Trägerschwingung dargestellt. In dem Beispiel aus Fig. 1 weisen die Symboltakte, die das Datensymbol 1 beinhalten, jeweils sechs Nulldurchgänge auf, während Symboltakte, die das Datensymbol -1 beinhalten, jeweils vier Nulldurchgänge zeigen. Dies hat zur Folge, dass die Nulldurchgänge zeitlich nicht immer äquidistant auftreten. Zum Zweck der Demodulation können somit die zeitlichen Abstände zwischen den Nulldurchgängen ermittelt und zur Detektion der digitalen Datensymbole genutzt werden.

Erfindungsgemäß wird zur Demodulation des frequenzmodulierten Empfangssignals aus den Zeitpunkten $t_i$ der Nulldurchgänge eine Folge $\{z_i\}$ berechnet. Jedes Folgenglied $z_i$ der Folge $\{z_i\}$ wird dabei aus der Differenz $t_{i+1} - t_i$ der Zeitpunkte $t_i$ und $t_{i+1}$ von zwei aufeinander folgenden Nulldurchgängen berechnet. Aus den Gleichungen (6) bis (19) lässt sich folgendes Signalmodell ableiten:

$$z_i \ = \ \sum_{k=-\infty}^{\infty} d_k \ \cdot \ h_{i,k} \tag{20}$$

Hierbei gibt die Datensymbolfolge $\{d_k\}$ die Reihenfolge der Datensymbole $d_k$ an, mit denen die Trägerschwingung senderseitig frequenzmoduliert wird. Ein Folgenglied $z_i$ ergibt sich nach Gleichung (20) aus einer Faltung der Datensymbolfolge $\{d_k\}$ mit einer Koeffizientenfolge $\{h_{i,k}\}$, wobei der Index i bei einer Faltung fest ist. Die Indizes i und k sind jeweils natürliche Zahlen.

Die dem vorliegenden Signalmodell zugrunde liegende Gleichung (20) wird erfüllt, wenn die Koeffizienten $h_{i,k}$ und die Folgenglieder $z_i$ beispielsweise folgende Formen annehmen:

$$h_{i,k} \ = \ 2\eta \ \cdot \ \left[q(t_{i+1} - k \cdot T) - q(t_i - k \cdot T)\right] \tag{21}$$

$$z_i = 1 - \frac{2\omega_0}{\pi} \cdot (t_{i+1} - t_i) \tag{22}$$

Da die Elementarimpulsform g(t) einen kompakten Träger [0,L·T] aufweist, sind die Koeffizienten $h_{i,k}$ bezüglich des Indexes k begrenzt.

Modellmäßig lassen sich die Gleichungen (20) bis (22) so interpretieren, dass die Folgenglieder $z_i$ jeweils durch eine Filteroperation aus den Datensymbolen $d_k$ erhalten werden, wobei die Koeffizienten $h_{i,k}$ die Filterkoeffizienten sind. Die Koeffizienten $h_{i,k}$ sind hierbei nicht fest, sondern zeitvariant.

Sofern das Bandpasssignal x(t) zwischen Sender und Empfänger über die Luftschnittstelle ohne Störungen übertragen wird, ist stets Gleichung (20) erfüllt. Wird das Bandpasssignal x(t) jedoch bei der Übertragung gestört, so ergeben sich empfängerseitig für die Folgenglieder $z_i$ Werte, die von Gleichung (20) abweichen. Um dennoch die ausgesendete Datensymbolfolge $\{d_k\}$ ermitteln zu können, wird nach folgender Vorschrift eine Minimierung im Sinne des Kriteriums der kleinsten Quadrate durchgeführt:

$$\left\| z_i - \sum_{k=-\infty}^{\infty} d_k \cdot h_{i,k} \right\|^2 = \sum_{i=-\infty}^{\infty} \left| z_i - \sum_{k=-\infty}^{\infty} d_k \cdot h_{i,k} \right|^2 \rightarrow \min \tag{23}$$

Es muss folglich unter den möglichen Datensymbolfolgen die Datensymbolfolge $\{d_k\}$ gefunden werden, mit welcher der Term (23) minimal wird.

Zur effizienten Lösung dieses Minimierungsproblems wird der Viterbi-Algorithmus in einer modifizierten Art verwendet.

Die Knoten des Trellis-Diagramms liegen dabei auf den Symboltaktgrenzen. Die Übergangsmetrikwerte werden allerdings nicht für die Symboltaktgrenzen, sondern für die Zeitpunkte $t_i$ berechnet. Bei Übergängen zwischen Zeitpunkten ti und $t_{i+1}$, bei denen beide Zeitpunkte $t_i$ und $t_{i+1}$ innerhalb eines Symboltakts liegen, werden nach der Berechnung der Übergangsmetrikwerte ausschließlich ADD-Operationen durchgeführt. Erst beim Überschreiten einer Symboltaktgrenze werden neben den ADD-Operationen auch COMPARE- und SELECT-Operationen durchgeführt.

In Fig. 1d sind die von dem Nulldurchgangsdetektor gemessenen Nulldurchgänge des frequenzmodulierten Empfangssignals für die ersten zwei Symboltakte nummeriert. Anhand dieser Nulldurchgänge lässt sich das erfindungsgemäße Vorgehen nachvollziehen. Zu den Zeitpunkten $t_2$ bis $t_6$ werden Übergangsmetrikwerte berechnet und anschließend nur ADD-Operationen durchgeführt, da die zugehörigen Nulldurchgänge alle innerhalb eines Symboltakts liegen. Erst beim Übergang zum Zeitpunkt $t_7$ wird die zwischen dem ersten und dem zweiten Symboltakt liegende Symboltaktgrenze überschritten. Folglich werden zum Zeitpunkt $t_7$ Übergangsmetrikwerte berechnet sowie ADD-, COMPARE- und SELECT-Operationen durchgeführt. Zu den Zeitpunkten $t_8$ bis $t_{10}$ werden Übergangsmetrikwerte berechnet und anschließend nur ADD-Operationen durchgeführt.

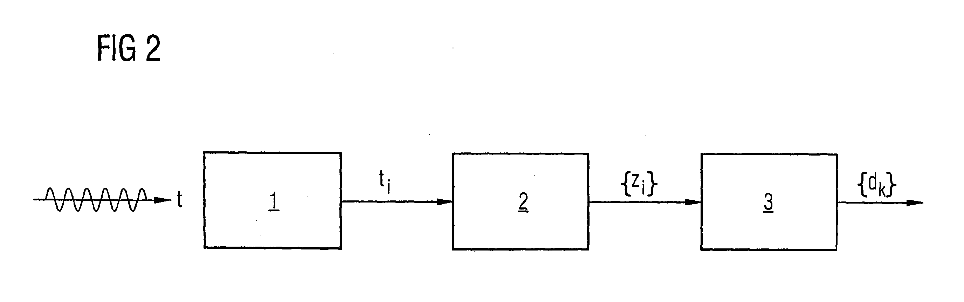

In Fig. 2 ist eine schematische Darstellung eines Ausführungsbeispiels der erfindungsgemäßen Vorrichtung dargestellt. Ein Detektor 1, ein Folgengenerator 2 und eine Berechnungseinheit 3 sind in der angegebenen Reihenfolge hintereinander geschaltet. Der Detektor 1 wird von einem frequenzmodulierten Empfangssignal gespeist und detektiert die Zeitpunkte $t_i$ der Nulldurchgänge des Empfangssignals. Aus den Zeitpunkte ti wird von dem Folgengenerator 2 die Folge $\{z_i\}$ generiert, woraus die Berechnungseinheit mittels des vorstehend beschriebenen modifizierten Viterbi-Algorithmus die Datensymbolfolge $\{d_k\}$, welche senderseitig zur Modulation des Übertragungssignals verwendet werden, rekonstruiert.

**Patentansprüche**

1. Vorrichtung zur Demodulation eines senderseitig mit einer Datensymbolfolge $\{d_k\}$ frequenzmodulierten analogen Empfangssignals, mit

- einem Detektor (1) für Nulldurchgänge des Empfangssignals, und
- einer Berechnungseinheit (3) zur Rekonstruktion der Datensymbolfolge $\{d_k\}$,

**gekennzeichnet durch** einen Folgengenerator (2) zur Erzeugung einer Folge $\{z_i\}$, wobei ein Folgenglied $z_i$ eine Funktion der Differenz $t_{i+1} - t_i$ von den zu zwei aufeinander folgenden Nulldurchgängen gehörenden Zeitpunkten $t_i$ und $t_{i+i}$ ist und wobei unter den möglichen Datensymbolfolgen diejenige als die gesuchte Datensymbolfolge $\{d_k\}$ ausgewählt wird, bei welcher die euklidische Distanz zwischen der Folge $\{z_i\}$ und einer empfängerseitig berechneten Folge minimal ist, wobei jedes Folgenglied der berechneten Folge gebildet wird aus einer Faltung der Datensymbolfolge $\{d_k\}$ mit einer Koeffizientenfolge $\{h_{i,k}\}$ zum Index k, und wobei die Koeffizientenfolgen $\{h_{i,k}\}$ aus den Zeitpunkten $t_i$ gewonnen werden.

2. Vorrichtung nach Anspruch 1,
   **dadurch gekennzeichnet,**

   - **dass** in die Berechnungseinheit (3) ein Viterbi-Algorithmus implementiert ist.

3. Vorrichtung nach Anspruch 2,
   **dadurch gekennzeichnet,**

   - **dass** die Frequenzmodulation des analogen Empfangssignals mit der Datensymbolfolge $\{d_k\}$ verstanden wird als Einspeisung der Datensymbolfolge $\{d_k\}$ in ein Filter, in welchem die Koeffizienten $h_{i,k}$ vorliegen und welches ausgangsseitig durch Faltungen der Datensymbolfolge $\{d_k\}$ mit den Koeffizientenfolgen $\{h_{i,k}\}$ die Folgte $\{z_i\}$ generiert.

4. Vorrichtung nach Anspruch 3,
   **dadurch gekennzeichnet,**

   - **dass** in der Berechnungseinheit (3) ein Trellis-Diagramm vorliegt, dessen Knoten die Filterzustände darstellen, wobei sich im Trellis-Diagramm vertikal übereinander liegende Knoten auf dieselbe Symboltaktgrenze beziehen,
   - **dass** die Berechnungseinheit (3) zu einem Zeitpunkt $t_{i+1}$ Übertragungsmetrikwerte berechnet und ADD-Operationen und keine COMPARE- oder SELECT-Operationen durchführt, wenn die Zeitpunkte $t_i$ und $t_{i+1}$ in demselben Symboltakt liegen, und
   - **dass** die Berechnungseinheit (3) zu einem Zeitpunkt $t_{i+1}$ Übertragungsmetrikwerte berechnet und ADD- und COMPARE- und SELECT-Operationen durchführt, wenn bei dem Übergang von dem Zeitpunkt $t_i$ zu dem Zeitpunkt $t_{i+1}$ eine Symboltaktgrenze überschritten wird.

5. Vorrichtung nach einem oder mehreren der vorhergehenden Ansprüche,
   **dadurch gekennzeichnet,**

   - **dass** die Folgenglieder $z_i$ der Folge $\{z_i\}$ und die Folgenglieder $h_{i,k}$ der Koeffizientenfolgen $\{h_{i,k}\}$ derart definiert

   sind, dass $z_i = \sum_{k=-\infty}^{\infty} d_k \cdot h_{i,k}$ gilt.

6. Vorrichtung nach Anspruch 5,
   **dadurch gekennzeichnet,**

   - **dass** die Folgenglieder $z_i$ durch die Funktion

   $$z_i = 1 - \frac{2\omega_0}{\pi} \cdot (t_{i+1} - t_i)$$ gegeben sind, wobei $\omega_0$ für die Trägerfrequenz des unmodulierten Signals steht,
   - **dass** die Koeffizienten $h_{i,k}$ durch die Funktion $h_{i,k} = 2\eta \cdot [q(t_{i+1} - k \cdot T) - q(t_i - k \cdot T)]$ gegeben sind, wobei $\eta$ für den Modulationsindex, T für die Symbolzeitdauer und q(t) für das Integral über die Elementarimpulsform g(t) stehen, und

   - **dass** der Modulationsindex $\eta$ durch $\eta = \frac{\Delta\omega \cdot T}{\pi}$ und das Integral q(t) über die Elementarimpulsform g

(t) durch $q(t) = \dfrac{1}{T} \displaystyle\int_{-\infty}^{t} g(\tau)d\tau$ gegeben sind, wobei $\Delta\omega$ den Modulationshub bezeichnet.

7. Vorrichtung nach einem oder mehreren der vorangehenden Ansprüche,
**dadurch gekennzeichnet,**

   - **dass** die Vorrichtung auf den das frequenzmodulierte Signal aussendenden Sender synchronisiert ist.

8. Vorrichtung nach einem oder mehreren der vorhergehenden Ansprüche,
**dadurch gekennzeichnet,**

   - **dass** das frequenzmodulierte Empfangssignal ein CPFSK-Signal ist.

9. Schnurloses digitales Kommunikationssystem mit einer Vorrichtung nach einem oder mehreren der vorhergehenden Ansprüche.

10. Verfahren zur Demodulation eines senderseitig mit einer Datensymbolfolge $\{d_k\}$ frequenzmodulierten analogen Empfangssignals, wobei folgende Verfahrensschritte durchgeführt werden:

   - Detektieren von Nulldurchgängen des Empfangssignals;
   und
   - Rekonstruieren der Datensymbolfolge $\{d_k\}$,

   **gekennzeichnet durch** den Verfahrensschritt:

   - Generieren einer Folge $\{z_i\}$, wobei ein Folgenglied $z_i$ aus einer Funktion der Differenz $t_{i+1} - t_i$ von den zu zwei aufeinander folgenden Nulldurchgängen gehörenden Zeitpunkten $t_i$ und $t_{i+1}$ generiert wird, und wobei
   - unter den möglichen Datensymbolfolgen diejenige als die gesuchte Datensymbolfolge $\{d_k\}$ ausgewählt wird, bei welcher die euklidische Distanz zwischen der Folge $\{z_i\}$ und einer empfängerseitig berechneten Folge minimal ist, wobei jedes Folgenglied der berechneten Folge gebildet wird aus einer Faltung der Datensymbolfolge $\{d_k\}$ mit einer Koeffizientenfolge $\{h_{i,k}\}$ zum Index k, und wobei die Koeffizientenfolgen $\{h_{i,x}\}$ aus den Zeitpunkten $t_i$ gewonnen werden.

11. Verfahren nach Anspruch 10,
**dadurch gekennzeichnet,**

   - **dass** im Verfahrenschritt (c) ein Viterbi-Algorithmus ausgeführt wird.

12. Verfahren nach Anspruch 11,
**dadurch gekennzeichnet,**

   - **dass** die Frequenzmodulation des analogen Empfangssignals mit der Datensymbolfolge $\{d_k\}$ verstanden wird als Einspeisung der Datensymbolfolge $\{d_k\}$ in ein Filter, in welchem die Koeffizienten $h_{i,k}$ vorliegen und welches ausgangsseitig durch Faltungen der Datensymbolfolge $\{d_k\}$ mit den Koeffizientenfolgen $\{h_{i,k\}}$ die Folge $\{z_i\}$ generiert.

13. Verfahren nach Anspruch 12,
**dadurch gekennzeichnet,**

   - **dass** zur Rekonstruktion der Datensymbolfolge $\{d_k\}$ ein Trellis-Diagramm verwendet wird, dessen Knoten die Filterzustände darstellen, wobei sich im Trellis-Diagramm vertikal übereinander liegende Knoten auf dieselbe Symboltaktgrenze beziehen,
   - **dass** zu einem Zeitpunkt $t_{i+1}$ Übergangsmetrikwerte berechnet werden und ADD-Operationen und keine COMPARE- oder SELECT-Operationen durchgeführt werden, wenn die Zeitpunkte $t_i$ und $t_{i+1}$ in demselben Symboltakt liegen, und
   - **dass** zu einem Zeitpunkt $t_{i+1}$ Übergangsmetrikwerte berechnet werden und ADD- und COMPARE- und SELECT-Operationen durchgeführt werden, wenn bei dem Übergang von dem Zeitpunkt $t_i$ zu dem Zeitpunkt $t_{i+1}$ eine Symboltaktgrenze überschritten wird.

**14.** Verfahren nach einem oder mehreren der Ansprüche 10 bis 13,
**dadurch gekennzeichnet,**

- **dass** die Folgenglieder $z_i$ der Folge $\{z_i\}$ und die Folgenglieder $h_{i,k}$ der Koeffizientenfolgen $\{h_{i,k}\}$ derart definiert

werden, dass $z_i = \sum\limits_{k=-\infty}^{\infty} d_k \cdot h_{i,k}$ gilt.

**15.** Verfahren nach Anspruch 14,
**dadurch gekennzeichnet,**

- **dass** die Folgenglieder $z_i$ durch die Funktion

$$z_i = 1 - \frac{2\omega_0}{\pi} \cdot (t_{i+1} - t_i)$$ gegeben sind, wobei $\omega_0$ für die Trägerfrequenz des unmodulierten Signals steht,
- **dass** die Koeffizienten $h_{i,k}$ durch die Funktion $h_{i,k} = 2\eta \cdot [q(t_{i+1} - k \cdot T) - q(t_i - k \cdot T)]$ gegeben sind, wobei $\eta$ für den Modulationsindex, T für die Symbolzeitdauer und q(t) für das Integral über die Elementarimpulsform g(t) stehen, und

- **dass** der Modulationsindex $\eta$ durch $\eta = \dfrac{\Delta\omega \cdot T}{\pi}$ und das Integral q(t) über die Elementarimpulsform g

(t) durch $q(t) = \dfrac{1}{T} \int\limits_{-\infty}^{t} g(\tau)d\tau$ gegeben sind, wobei $\Delta\omega$ den Modulationshub bezeichnet.

**16.** Verfahren nach einem oder mehreren der Ansprüche 10 bis 15,
**dadurch gekennzeichnet,**

- **dass** vor der Durchführung der Verfahrensschritte (a) bis (c) der das frequenzmodulierte Signal empfangende Empfänger auf den das frequenzmodulierte Signal aussendenden Sender synchronisiert wird.

**17.** Verfahren nach einem oder mehreren der Ansprüche 10 bis 16,
**dadurch gekennzeichnet,**

- **dass** das frequenzmodulierte Empfangssignal ein CPFSK-Signal ist.


**Claims**

**1.** Apparatus for demodulation of an analog received signal which is frequency-modulated at the transmitter end with a data symbol sequence $\{d_k\}$, comprising:

- a detector (1) for zero crossings of the received signal, and
- a calculation unit (3) for reconstruction of the data symbol sequence $\{d_k\}$,

**characterized by**
a sequence generator (2) for production of a sequence $\{z_i\}$, with a sequence element $z_i$ being a function of the difference $t_{i+1} - t_i$ between the times $t_i$ and $t_{i+1}$ associated with two successive zero crossings, and
with that data symbol sequence being chosen from the possible data symbol sequences as the sought data symbol sequence $\{d_k\}$ for which the Euclidean distance between the sequence $\{z_i\}$ and a sequence which is calculated at the receiver end is a minimum, with each sequence element in the calculated sequence being formed from a convolution of the data symbol sequence $\{d_k\}$ with a coefficient sequence $\{h_{i,k}\}$ for the index k, and with the coefficient sequences $\{h_{i,k}\}$ being obtained from the times $t_i$.

2. Apparatus according to Claim 1,
   **characterized**

   - **in that** a Viterbi algorithm is implemented in the calculation unit (3).

3. Apparatus according to Claim 2,
   **characterized**

   - **in that** the frequency modulation of the analog received signal with the data symbol sequence $\{d_k\}$ is understood as the data symbol sequence $\{d_k\}$ being fed into a filter in which the coefficients $h_{i,k}$ are present, and which generates the sequence $\{z_i\}$ on the output side by convolutions of the data symbol sequence $\{d_k\}$ with the coefficient sequences $\{h_{i,k}\}$.

4. Apparatus according to Claim 3,
   **characterized**

   - **in that** there is a trellis diagram in the calculation unit (3), whose nodes represent the filter states, with nodes which are located vertically one above the other in the trellis diagram relating to the same symbol clock cycle boundary,
   - **in that** the calculation unit (3) calculates transmission metric values, and carries out ADD operations but no COMPARE or SELECT operations for a time $t_{i+1}$ when the times $t_i$ and $t_{i+1}$ are in the same symbol clock cycle, and
   - **in that** the calculation unit (3) calculates transmission metric values and carries out ADD, COMPARE and SELECT operations at a time $t_{i+1}$ when a symbol clock cycle boundary is crossed between the time $t_i$ and the time $t_{i+1}$.

5. Apparatus according to one or more of the preceding claims,
   **characterized**

   - **in that** the sequence elements $z_i$ in the sequence $\{z_i\}$, and the sequence elements $h_{i,k}$ in the coefficient

   sequences $\{h_{i,k}\}$ are defined in such a way that $z_i = \sum_{k=-\infty}^{\infty} d_k \cdot h_{i,k}$.

6. Apparatus according to Claim 5,
   **characterized**

   - **in that** the sequence elements $z_i$ are given by the function $z_i = 1 - \dfrac{2\omega_0}{\pi} \cdot (t_{i+1} - t_i)$ where $\omega_0$ is the

   carrier frequency of the unmodulated signal,
   - **in that** the coefficients $h_{i,k}$ are given by the function $h_{i,k} = 2\eta \cdot [q(t_{i+1} - k \cdot T) - q(t_i - k \cdot T)]$ where $\eta$ is the modulation index, T is the symbol time duration and q(t) is the integral over the elementary pulse shape g(t), and

   - **in that** the modulation index $\eta$ is given by $\eta = \dfrac{\Delta\omega \cdot T}{\pi}$ and the integral q(t) over the elementary pulse shape g(t) is given by $q(t) = \dfrac{1}{T} \int_{-\infty}^{t} g(\tau)d\tau$, where $\Delta\omega$ is the modulation shift.

7. Apparatus according to one or more of the preceding claims,
   **characterized**

- **in that** the apparatus and the transmitter which transmits the frequency-modulated signal are synchronized.

8. Apparatus according to one or more of the preceding claims,
   **characterized**

   - **in that** the frequency-modulated received signal is a CPFSK signal.

9. Cordless digital communications system comprising an apparatus according to one or more of the preceding claims.

10. Method for demodulation of an analog received signal which is frequency-modulated at the transmitter end with a data symbol sequence $\{d_k\}$, with the following method steps being carried out:

    - detection of zero crossings in the received signal; and
    - reconstruction of the data symbol sequence $\{d_k\}$, **characterized by** the method step:
    - generation of a sequence $\{z_i\}$, with a sequence element $Z_i$ being a function of the difference $t_{i+1}$ - ti between the times $t_i$ and $t_{i+1}$ associated with two successive zero crossings, and
    - with that data symbol sequence being chosen from the possible data symbol sequences as the sought data symbol sequence$\{d_k\}$ for which the Euclidean distance between the sequence $\{z_i\}$ and a sequence which is calculated at the receiver end is a minimum, with each sequence element in the calculated sequence being formed from a convolution of the data symbol sequence $\{d_k\}$ with a coefficient sequence $\{h_{i,k}\}$ for the index k, and with the coefficient sequences $\{h_{i,k}\}$ being obtained from the times $t_i$.

11. Method according to Claim 10,
    **characterized**

    - **in that** a Viterbi algorithm is carried out in method step (c).

12. Method according to Claim 11,
    **characterized**

    - **in that** the frequency modulation of the analog received signal with the data symbol sequence $\{d_k\}$ is understood as the data symbol sequence $\{d_k\}$ being fed into a filter in which the coefficients $h_{i,k}$ are present, and which generates the sequence $\{z_i\}$ on the output side by convolutions of the data symbol sequence $\{d_k\}$ with the coefficient sequences $\{h_{i,k}\}$ .

13. Method according to Claim 12,
    **characterized**

    - **in that** a trellis diagram whose nodes represent the filter states is used for reconstruction of the data symbol sequence $\{d_k\}$, with nodes which are located vertically one above the other in the trellis diagram relating to the same symbol clock cycle boundary,
    - **in that** branch metric values are calculated and ADD operations are carried out, but not COMPARE or SELECT operations, for a time $t_{i+1}$ when the times $t_i$ and $t_{i+1}$ are in the same symbol clock cycle, and
    - **in that** branch metric values are calculated and ADD, COMPARE and SELECT operations are carried out for a time $t_{i+1}$ when a symbol clock cycle boundary is crossed between the time $t_i$ and the time $t_{i+1}$.

14. Method according to one or more of Claims 10 to 13, **characterized**

    - **in that** the sequence elements $z_i$ in the sequence $\{z_i\}$, and the sequence elements $h_{i,k}$ in the coefficient

    sequences $\{h_{i,k}\}$ are defined in such a way that $z_i \;=\; \sum_{k=-\infty}^{\infty} d_k \cdot h_{i,k}$ .

15. Method according to Claim 14,
    **characterized**

- **in that** the sequence elements $z_i$ are given by the function $z_i = 1 - \dfrac{2\omega_0}{\pi} \cdot (t_{i+1} - t_i)$ where $\omega_0$ is the carrier frequency of the unmodulated signal,

- **in that** the coefficients $h_{i,k}$ are given by the function $h_{i,k} = 2\,\eta \cdot [q(t_{i+1} - k \cdot T) - q(t_i - k \cdot T)]$ where $\eta$ is the modulation index, T is the symbol time duration and q(t) is the integral over the elementary pulse shape g(t), and

- **in that** the modulation index $\eta$ is given by $\eta = \dfrac{\Delta\omega \cdot T}{\pi}$ and the integral q(t) over the elementary pulse shape g(t) is given by $q(t) = \dfrac{1}{T} \int_{-\infty}^{t} g(\tau)\,d\tau$ , where $\Delta\omega$ is the modulation shift.

16. Method according to one or more of Claims 10 to 15, **characterized**

- **in that** before carrying out the method steps (a) to (c), the receiver which is receiving the frequency-modulated signal is synchronized to the transmitter which is transmitting the frequency-modulated signal.

17. Method according to one or more of Claims 10 to 16, **characterized**

- **in that** the frequency-modulated received signal is a CPFSK signal.


**Revendications**

1. Dispositif de démodulation d'un signal de réception analogique modulé en fréquence du côté de l'émetteur par une suite $\{d_k\}$ de symboles de données, comprenant

- un détecteur (1) de passage par zéro du signal de réception, et
- une unité (3) de calcul pour la reconstruction de la suite $\{d_k\}$ de symboles de données,

**caractérisé par** un générateur (2) de suite pour la production d'une suite $\{z_i\}$, dans laquelle un élément $\{z_i\}$ de la suite est une fonction de la différence $t_{i+1} - t_i$ entre des instants $t_i$ et $t_{i+1}$ appartenant à deux passages par zéro successifs et dans lequel, parmi les suites de symboles de données possibles, il est choisi comme la suite $\{d_k\}$ de symboles de données cherchée celle pour laquelle la distance euclidienne entre la suite $\{z_i\}$ et une suite calculée du côté du récepteur est minimum, chaque élément de la suite calculée étant formé à partir d'une convolution de la suite $\{d_k\}$ de symboles de données avec une suite $\{h_{i,k}\}$ de coefficients pour indice k et les suites $\{h_{i,k}\}$ de coefficients étant obtenues à partir des instants $t_i$.

2. Dispositif suivant la revendication 1,
**caractérisé**

- **en ce qu'**un algorithme de Viterbi est mis en oeuvre dans l'unité (3) de calcul.

3. Dispositif suivant la revendication 2,
**caractérisé**

- **en ce que** la modulation de fréquence du signal de réception analogique par la suite $\{d_k\}$ de symboles de données s'entend comme une injection de la suite $\{d_k\}$ de symboles de données dans un filtre, dans lequel se trouvent les coefficients $\{h_{i,k}\}$ et qui produit la suite $\{z_i\}$ du côté de la sortie par des convolutions de la suite $\{d_k\}$ de symboles de données avec les suites $\{h_{i,k}\}$ de coefficients.

4. Dispositif suivant la revendication 3,
**caractérisé**

- **en ce qu'**il y a dans l'unité (3) de calcul un diagramme de Trellis, dont les noeuds représentent les états du filtre, des noeuds se trouvant verticalement les uns au-dessus des autres dans le diagramme de Trellis se rapportant à de mêmes limites de cadence de symbole,

- **en ce que** l'unité (3) de calcul calcule à un instant $t_{i+1}$ des valeurs de métrique de transition et effectue des opérations ADD et n'effectue pas d'opération COMPARE ou SELECT, si les instants $t_i$ et $t_{i+1}$ se trouvent dans la même cadence de symbole,
et
- **en ce que** l'unité (3) de calcul calcule des valeurs de métrique de transition à un instant $t_{i+1}$ et effectue les opérations ADD et COMPARE et SELECT, si, lors du passage à l'instant $t_i$ et $t_{i+1}$, une limite de cadence de symbole est dépassée.

5. Dispositif suivant l'une ou plusieurs des revendications précédentes, **caractérisé**

- **en ce qu'**on définit les éléments $z_i$ de la suite $\{z_i\}$ et les éléments $\{h_{i,k}\}$ des suites $\{h_{i,k}\}$ de coefficients, de

façon à avoir $z_i = \sum_{k=-\infty}^{\infty} d_k \cdot h_{i,k}$

6. Dispositif suivant la revendication 5, **caractérisé**

- **en ce que** les éléments $z_i$ de la suite sont donnés par la fonction $z_i = 1 - \dfrac{2\omega_0}{\pi} \cdot (t_{i+1} - t_i)$ , $\omega_0$ étant la fréquence porteuse du signal non modulé,
- **en ce que** les coefficients $h_{i,k}$ sont donnés par la fonction $h_{i,k} = 2\eta \cdot [q(t_{i+1} - k \cdot T) - q(t_i - k \cdot T)]$, $\eta$ étant l'indice de modulation, T étant la durée de symbole et q(t) étant l'intégrale sur la forme g(t) d'impulsion élémentaire, et

- **en ce que** l'indice $\eta$ de modulation est donné par $\eta = \dfrac{\Delta\omega \cdot T}{\pi}$ et l'intégrale q(t) sur la forme g(t) d'impulsion élémentaire est donnée par $q(t) = \dfrac{1}{T} \displaystyle\int_{-\infty}^{t} g(\tau)d$ , $\Delta\omega$ étant l'amplitude de modulation.

7. Dispositif suivant l'une ou plusieurs des revendications précédentes, **caractérisé**

- **en ce que** le dispositif est synchronisé sur l'émetteur émettant le signal modulé en fréquence.

8. Dispositif suivant l'une ou plusieurs des revendications précédentes, **caractérisé**

- **en ce que** le signal de réception modulé en fréquence est un signal CPFSK.

9. Système de communication numérique sans fil comprenant un dispositif suivant l'une ou plusieurs des revendications précédentes.

10. Procédé de démodulation d'un signal de réception analogique modulé en fréquence par une suite $\{d_k\}$ de symboles de données, dans lequel on effectue les stades de procédé suivantes :

- on détecte des passages par zéro du signal de réception ;
et
- on reconstruit la suite $\{d_k\}$ de symboles de données, **caractérisé par** le stade de procédé, dans lequel :
- on produit une suite $\{z_i\}$, dans laquelle un élément $z_i$ de la suite est produit à partir d'une fonction de la différence $t_{i+1} - t_i$ de deux instants $t_i$ et $t_{i+1}$ appartenant à deux passages par zéro successifs, et dans lequel
- parmi les suites de symboles de données possibles, on choisit comme suite $\{d_k\}$ de symboles de données cherchée celle pour laquelle la distance euclidienne entre la suite $\{z_i\}$ et une suite calculée du côté du récepteur est minimum, chaque élément de la suite calculée étant formé à partir d'une convolution de la suite $\{d_k\}$ de symboles de données avec une suite $\{h_{i,k}\}$ de coefficients pour indice k et les suites $\{h_{i,k}\}$ de coefficients étant obtenues à partir des instants $t_i$.

**11.** Procédé suivant la revendication 10,
**caractérisé**

- **en ce que**, dans le stade (c) du procédé, on effectue un algorithme de Viterbi.

**12.** Procédé suivant la revendication 11,
**caractérisé**

- **en ce que** la modulation de fréquence du signal de réception analogique par la suite $\{d_k\}$ de symboles de données s'entend comme une injection de la suite $\{d_k\}$ de symboles de données dans un filtre, dans lequel se trouvent les coefficients $\{h_{i,k}\}$ et qui produit la suite $\{z_i\}$ du côté de la sortie par des convolutions de la suite $\{d_k\}$ de symboles de données avec les suites $\{h_{i,k}\}$ de coefficients.

**13.** Procédé suivant la revendication 12,
**caractérisé**

- **en ce que**, pour la reconstruction de la suite $\{d_k\}$ de symboles de données, on utilise un diagramme de Trellis, dont les noeuds représentent les états du filtre, des noeuds se trouvant les uns au-dessus des autres verticalement dans le diagramme de Trellis se rapportant à la même limite de cadence de symbole,
- **en ce que**, à un instant $t_{i+1}$, on calcule des valeurs de métrique de transition et on effectue des opérations ADD et on n'effectue pas d'opération COMPARE ou SELECT, si les instants $t_i$ et $t_{i+1}$ se trouvent dans la même cadence de symbole,
et
- **en ce que**, à un instant $t_{i+1}$, on calcule des valeurs de métrique de transition à un instant $t_{i+1}$ et on effectue les opérations ADD et COMPARE et SELECT, si, lors du passage de l'instant $t_i$ et à l'instant $t_{i+1}$, une limite de cadence de symbole est dépassée.

**14.** Procédé suivant l'une ou plusieurs des revendications 10 à 13,
**caractérisé**

- **en ce qu'**on définit les éléments $z_i$ de la suite $\{z_i\}$ et les éléments $\{h_{i,k}\}$ des suites $\{h_{i,k}\}$ de coefficients, de

façon à avoir $z_i = \sum_{k=-\infty}^{\infty} d_k \cdot h_{i,k}$

**15.** Procédé suivant la revendication 14,
**caractérisé**

- **en ce que** les éléments $z_i$ de la suite sont donnés par la fonction $z_i = 1 - \dfrac{2\omega_0}{\pi} \cdot (t_{i+1} - t_i)$, $\omega_0$

étant la fréquence porteuse du signal non modulé,
- **en ce que** les coefficients $h_{i,k}$ sont donnés par la fonction $h_{i,k} = 2\eta \cdot [q(t_{i+1} - k \cdot T) - q(t_i - k \cdot T)]$, $\eta$ étant l'indice de modulation, T étant la durée de symbole et $q(t)$ étant l'intégrale sur la forme $g(t)$ d'impulsion élémentaire, et
- **en ce que** l'indice $\eta$ de modulation est donné par

$\eta = \dfrac{\Delta\omega \cdot T}{\pi}$ et l'intégrale $q(t)$ sur la forme $g(t)$ d'impulsion élémentaire est donnée par

$q(t) = \dfrac{1}{T} \displaystyle\int_{-\infty}^{t} g(\tau)d$, $\Delta\omega$ étant l'amplitude de modulation.

**16.** Procédé suivant l'une ou plusieurs des revendications 10 à 15,
**caractérisé**

- **en ce que**, avant d'effectuer les stades (a) à (c) du procédé, on synchronise le récepteur recevant le signal modulé en fréquence sur l'émetteur émettant le signal modulé en fréquence.

**17.** Procédé suivant l'une ou plusieurs des revendications 10 à 16,

**caractérisé**

- **en ce que** le signal de réception modulé en fréquence est un signal CPFSK.

FIG 1A

FIG 1B

$t/T$

FIG 1C

$T$

$t$

FIG 1D

$t/T$

FIG 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103479

- WO 0113524 A1

**In der Beschreibung aufgeführte Nicht-Patentliteratur**

- **Schrift İsmailoglu, N ; Yalçin, T.** Low-Power Design of a Digital FM Demodulator Based on Zero-Cross Detection at IF. *IEEE 50th Vehicular Technology Conference,* 19. September 1999, vol. 2, 810-813

- **von K. D. Kammeyer.** Nachrichtenübertragung. B. G. Teubner Verlag, 1996